# EUROPÄISCHE PATENTSCHRIFT

(11) **EP 1 285 019 B1**
(45) Veröffentlichungstag und Bekanntmachung des Hinweises auf die Patenterteilung: **06.10.2004**
(21) Anmeldenummer: 01940446.6
(22) Anmeldetag: 10.05.2001
(51) Int. Cl.: C08G 75/14, C08L 81/04

(54) **ZWEIKOMPONENTIGER POLYSULFID-KLEB/DICHTSTOFF**
TWO-COMPONENT POLYSULPHIDE ADHESIVE/SEALANT
ADHESIF/AGENT D'ETANCHEITE AU POLYSULFURE A DEUX CONSTITUANTS

(30) Priorität: 23.05.2000 DE 10025529
(43) Veröffentlichungstag der Anmeldung: 26.02.2003
(73) Patentinhaber: Henkel Teroson GmbH, 69123 Heidelberg (DE)
(72) Erfinder: PROEBSTER, Manfred, 69226 Nussloch (DE); GRIMM, Stefan, 68723 Schwetzingen (DE)
(74) Vertreter: Scheffler, Ingolf
(86) Internationale Anmeldenummer: PCT/EP2001/005338
(87) Internationale Veröffentlichungsnummer: WO 2001/090222

(56) Entgegenhaltungen:
- DE-A- 2 222 782
- DE-A- 2 635 570
- US-A- 4 623 711

## Beschreibung

Die vorliegende Erfindung betrifft zweikomponentige Isolierglas― Kleb-/Dichtstoffe auf der Basis von flüssigen Polysulfid- und/ oder Polymercaptanpolymeren, die Benzoesäureester als Weichmacher enthalten.

Ein- /mehrkomponentige Zusammensetzungen auf der Basis von Polysulfid-Polymeren und/ oder Polymercaptanpolymeren werden seit langer Zeit erfolgreich im Hoch- und Tiefbau, in der Flugzeug- oder Fahrzeugindustrie, im Schiffbau, sowie im großen Umfang für die Herstellung von Isoliergläsern verwendet. Einer der Hauptgründe dafür, daß der sehr hohe Marktanteil der Isolierglas- Kleb-/Dichtstoffe auf der Basis von Polysulfid-Polymeren oder Polymercaptanen aufgebaut ist, liegt darin, daß sich diese Polymeren durch eine hohe Ozonbeständigkeit auszeichnen sowie eine sehr gute Beständigkeit gegen viele Lösungsmittel und Chemikalien aufweisen. Außerdem haben sie eine sehr hohe Langzeitbeständigkeit gegen Witterungseinflüsse und zeichnen sich durch eine sehr niedrige Durchlässigkeit für Gase aus. Siehe hierzu Beispielsweise A. Damusis, "Sealants", New York (1967), Seite 182 - 184; E. Dachselt "Thioplaste" Leipzig (1971), Seite 50 - 56 oder H. Lucke "Aliphatische Polysulfide", Heidelberg, (1992) Seite 111 - 114.

Üblicherweise werden Kleb-/Dichtstoffe zur Herstellung von Isolierglas-Verbunden als zweikomponentige Systeme formuliert, bei denen die beiden Komponenten erst unmittelbar vor deren Applikation zusammen gebracht, vermischt und aufgetragen werden.

Bei einem derartigen zweikomponentigen Material enthält üblicherweise die eine Komponente das Bindemittel ― hier ein flüssiges Polysulfid-Polymer oder flüssiges Polymercaptan-Polymer. Diese Komponente wird üblicherweise als Komponente "A" bezeichnet. Die zweite Komponente enthält einen Vemetzer, Härter oder ein Oxidationsmittel und wird üblicherweise als Komponente "B" bezeichnet. Weiterhin enthalten beide Komponenten in der Regel Weichmacher, Füllstoffe, gegebenen falls Pigmente oder Farbstoffe. Darüber hinaus kann die Komponente A noch haftvermittelnde Substanzen, sowie Alterungsschutzmittel enthalten und die Komponente B kann noch Beschleuniger enthalten.

Die Anzahl der mit dem Polysulfid-Polymer bzw. Polymercaptan-Polymer verträglichen Weichmacher ist sehr begrenzt. Neben einer geringen Anzahl von Phthalsäureestern können in zwei-komponentigen Kleb- /Dichtstoffen auf der Basis von Polysulfiden oder Polymercaptanen chlorierte Paraffine, Butyldiglycol oder hydrierte Terphenyle eingesetzt werden. Die chlorierten Paraffine werden heute aus Gründen des Umweltschutzes i.d.R. nicht mehr eingesetzt. Neben der Verträglichkeit und Alterungsbeständigkeit müssen die für Isolierglas- Kleb-/Dichtstoffe geeigneten Weichmacher noch einen sehr niedrigen Dampfdruck haben, damit es nicht zur Bildung von Niederschlägen in der Isolierglaseinheit kommt. Dies bedeutet, daß die Isolierglaseinheit "Fog-Freiheit" bzw. "Non-Fogging" ― Eigenschaften aufweisen muss. Weiterhin muß der Weichmacher eine ausreichend hohe Viskosität besitzen, um das Absetzen der pulverförmigen Bestandteile, insbesondere in der Komponente B zu verhindern, so daß es während der Lagerzeit der Komponenten nicht zu einer Phasenseparation kommt. Dies begrenzt die Auswahl der geeigneten Weichmacher sehr erheblich, so daß von den Estern der Phthalsäure heute fast ausschließlich das Butylbenzylphthalat für die Komponente A verwendet wird und für die Komponente B der hochviskose Weichmacher 7-(2,6,6,8-tetramethyl-4-oxa-3-oxononyl)-benzylphthalat, auch unter dem Handelsnamen "Santicizer 278" (Fa. Solutia) bekannt.

In jüngerer Zeit wird von einigen Arbeitsgruppen darauf hingewiesen, daß Phthalsäureester endocrine Effekte im Uterus bewirken können und bei männlichen Nachkommen die Spermienrate reduziert werden kann. Ausdrücklich wird hierbei auch das Benzylbutylphthalat genannt. Siehe hierzu die Veröffentlichungen von R. M. Sharpe. N. E. Skakkebaek; "Are oestrogens involved in falling sperm counts and disorders of the male reproductive tract?" Lancet 341 (1993), S. 1392-1395.
Auch neuere Veröffentlichungen im Internet von P. M. D. Foster,
http://www.ciit.org/ACT97/ACTIVITIESSEPT97/sept97.html sowie R. M. Sharpe, J. S. Fisher, Mike M. Millar, S. Jobling, und John P. Sumpter,
http://ehpnet1.niehs.nih.gov/docs/1995/103-12/sharpe.html weisen auf ähnliche Gefahren hin, die auf Phthalatweichmacher zurück geführt werden.

Auf hochviskose Phthalsäureester in der Komponente B von Isolierglas ― Kleb-/Dichtstoffen konnte bisher nicht verzichtet werden, weil diese zum einen mit den eingesetzen Polysulfid ― Polymeren oder Polymercaptan-Polymer verträglich sind, ein Absetzen der dispersen Bestandteile verhindern und zum anderen ein "Fogging" vermieden wird. Ein Nachteil der Verwendung der sogenannten hochviskosen Phthalsäueester war einerseits die schwierige Verpumpbarkeit und anderseits die schlechte Durchmischung der beiden Komponenten A und B während der Applikation.

Der Erfindung liegt somit die Aufgabe zu Grunde, einen Weichmacher für zweikomponentige Kleb-/Dichtstoffe auf der Basis von Polysulfid-Polymeren und/oder Polymercaptan-Polymeren zu finden, der die oben beschriebenen Nachteile des Standes der Technik nicht aufweist und von dem keine negativen biologischen Effekte bekannt sind.

Die erfindungsgemäße Lösung der Aufgabe ist den Patentansprüchen zu entnehmen, sie besteht im wesentlichen darin, daß die bindemittelhaltige Komponente A:
15 bis 35 Gew % flüssiges Polysulfid- und/oder Polymercaptanpolymer
5 bis 20 Gew % mindestens eines Benzoat-Weichmachers
30 bis 65 Gew % Füllstoffe
0,1 bis 7 Gew % eines Silanhaftvermittlers
und die Härterkomponente B:
20 bis 45 Gew % mindestens eines Benzoat-Weichmachers
0,1 bis 40 Gew % mindestens eines Copolymers
10 bis 40 Gew % eines Oxidationsmittels
1 bis 5 Gew % Beschleuniger
15 bis 35 Gew % Füllstoffe
enthält, wobei die Summen der Bestandteile der Komponenten A bzw. B jeweils 100 % ergeben.

Die DE-A-2222782 beschreibt Isolierglas - Polysulfid-Dichtmassen, die mit Vormischungen aus Butylkautschuk, Calciumcarbonat und Benzoesäureestem vermischt werden sollen. Diese Zusammensetzungen enthalten jedoch zusätzlich Dioctylphthalat als Weichmacher. Zweikomponentige Isolierglas- Kleb-/Dichtstoffe, die keine Phthalsäureester als Weichmacher enthalten werden in dieser Schrift nicht offenbart.

Die US-A-3925947 beschreibt die Versiegelung von Windschutzscheiben in Fahrzeugen mit Hilfe von elastomere Schmelzklebstoffen als-Dichtungszusammensetzungen. Für diese Schmelzklebstoffe werden eine Vielzahl von thermoplastischen Elastomeren als elastische Polymere vorgeschlagen, unter anderem feste Polysulfid-Polymere von Typ Thiokol FA, ST. Als mit zu verwendende Weichmacher werden Polybutene, Phosphatester, Phthalatester, Paraffinöle, chlorierte Paraffine, sowie Teere, Asphalte und Benzoesäureester von Polyalkylenglycolen vorgeschlagen. Die Verwendung von Benzoaten in zweikomponentigen reaktiven Kleb-/Dichtstoffen auf Basis von flüssigen Polysulfid-Polymeren werden auch in dieser Schrift nicht offenbart. Als flüssige Polysulfid-Polymere für die erfindungsgemäße bindemittelhaltige Komponente A werden vorzugsweise die flüssigen LP 2, LP 12, LP 31 bzw. LP 32 oder LP 33 Polymere der Firma Thiokol oder ähnliche Polymere anderer Hersteller verwendet. Diese Polymere werden bekanntlich üblicherweise durch Kondensation von bis- (2-chlorethoxy)methan mit Natriumdisulfid und/ oder Natriumpolysulfid hergestellt, und haben die nachfolgend dargestellten Strukturen (I) bzw. (II).

(I) -(CH₂CH₂-O-CH₂-O-CH₂CH₂-S-S)ₙ-

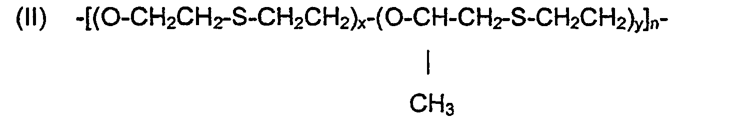

wobei x=2, y=1 und n= 6-50 ist.

Anstelle von oder zusammen mit den vorgenannten Polysulfid-Polymeren können jedoch auch flüssige Polymercaptan-Polymere verwendet werden, die durch Umsetzung eines Mercaptoalkohols mit isocyanatterminierten Prepolymeren auf der Basis von Polyoxyalkylenen hergestellt wurden. Eine weitere Möglichkeit ist die Verwendung von Thioether Polymercaptan-modifizierten Polysulfiden. Die beiden letztgenannten Polymercaptan-Typen sind beispielsweise in der DE-A-3508428 bzw. EP-A-268836, EP-A-176439 oder WO-8201879 beschrieben.

Die erfindungsgemäß einzusetzenden Benzoesäureester sind vorzugsweise Dibenzoate von Ethylenglycol, Diethylenglycol, Triethylenglycol, Tetraethylenglycol, Propylenglycol, Dipropylenglycol, Tripropylenglycol, Tetrapropylenglycol, 2,2,4-Trimethyl-1,3-pentandiol, Hydroxypivalinsäureneopentylglycolester oder Mischungen dieser Benzoate. Weitere Bestandteile der Komponente A sind Füllstoffe wie zum Beispiel beschichtete und / oder nicht beschichtete Kreiden (Calciumcarbonate, Calcium-Magnesiumcarbonate), Aluminiumsilicate, Magnesium-silicate, Kaolin, Schwerspat oder deren Mischungen. Weiterhin können Thixotropierungsmittel wie zum Beispiel Bentone (Montmorillonit) pyrogene Kieselsäuren, faserförmige Thixotropiermittel Verwendung finden sowie Pigmente wie zum Beispiel Titandioxid, Russ sowie anorganische Farbpigmente. Weiterhin kann die A-Komponente Trocknungsmittel wie zum Beispiel Molekularsiebe, Calciumoxid oder Bariumoxid enthalten, in der Regel enthält sie außerdem noch Haftvermittler- wie zum Beispiel organofunktionelle Trialkoxysilane und gegebenfalls Verzögerer wie zum Beispiel langkettige Fettsäuren (Stearinsäure und deren Derivate) sowie ggf.Beschleuniger in Form von Schwefel, Magnesiumacetat, Thiuramen, Aminen oder Guanidinderivaten.

Zu den organofunktionellen Silanen als Haftvermittler gehören beispielsweise das 3-Glycidoxy-Propyltrialkoxysilan, 3-Acryloxypropyltrialkoxysilan, 3-Aminopropyltrialkoxysilan, Vinyltrialkoxysilan, N-Aminoethyl-3-Aminopropyl-Methyldialkoxysilan, Phenylaminopropyltrialkoxysilan, Aminoalkyltrialkoxydisilan oder i-Butylmethoxysilan. Als Alkoxygruppe sind dabei die Methoxy- bzw. Ethoxygruppe besonders bevorzugt.

Die Komponente B enthält neben dem als Vernetzer wirkenden Oxidationsmittel wie zum Beispiel Bleioxid, Mangandioxid, Calciumperoxid, Zinkperoxid, Natriumperborat oder organische Peroxide wie zum Beispiel Cumolhydroperoxid als Weichmacher die oben genannten Benzoat-Weichmacher sowie die obengenannten Füllstoffe, Verzögerer, Pigmente, Schwefel und / oder Alterungsschutzmittel. Sie kann in seltenen Fällen auch die oben genannten Haftvermittler enthalten. Weiterhin enthält sie ggf. Beschleuniger wie zum Beispiel Thiuramdisulfide, Guanidine, Dithiocarbamate, Amine.

Weiterhin enthält die Härterkomponente B vorzugsweise zwischen 0,10 - 40 Gew % eines Hochpolymers ausgewählt aus Ethylenvinylacetat (EVA) - Copolymeren, Vinylchlorid-Vinylacetat-Copolymeren oder anderen mit den restlichen Systemkomponenten verträglichen Copolymeren.

Besonders bevorzugt ist dabei EVA mit einem Vinylacetatanteil von 5 bis 50 %. Üblicherweise werden die Komponenten A und B bei der Anwendung im Verhältnis 10:1 eingesetzt. Bei entsprechender Abstimmung der A ― Komponente und B-Komponente sind jedoch auch andere Mischungsverhältnisse möglich.

Die Komponente A wird dabei in an sich bekannter Weise durch Mischen der Komponeten in schnellaufenden Mischagregaten wie zum Beispiel, Planetenmischem oder Knetern und dergleichen, gegebenfalls unter Vakuum, hergestellt.

Für die Komponente B wird zunächst der Benzoatweichmacher mit dem Copolymer im Gewichtsverhältnis von ca 40:1 bis 40:0,1 bei einer Temperatur oberhalb von 70 °C, vorzugsweise zwischen 120 - 140 °C, vermischt. Dieser Masterbatch wird dann zur Herstellung der Komponente B in an sich bekannter Weise mit den übrigen Bestandteilen vermischt, wobei es notwendig sein kann, daß die festen Oxidationsmittel wie zum Beispiel das besonders bevorzugte Mangandioxid zunächst mit Weichmachern angepastet wird und beispielsweise auf einer Dreiwalze fein vermahlen wird.

Anhand der nachfolgenden Beispiel sollte die Erfindung näher erläutert werden, wobei die Auswahl der Beispiele keine Beschränkung des Umfanges des Erfindungsgegenstandes darstellen sollen. Falls nicht anders angegeben, sind alle Mengenangaben der Rezepturbestandteile Gewichtsteile.

### Erfindungsgemäßes Beispiel und Vergleichsbeispiele:

Die in der nachfolgenden Tabelle aufgeführten Beispiele wurden wie oben beschrieben in einem Planetenmischer hergestellt.

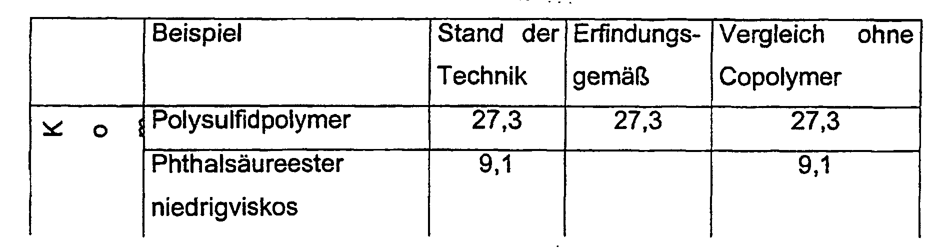

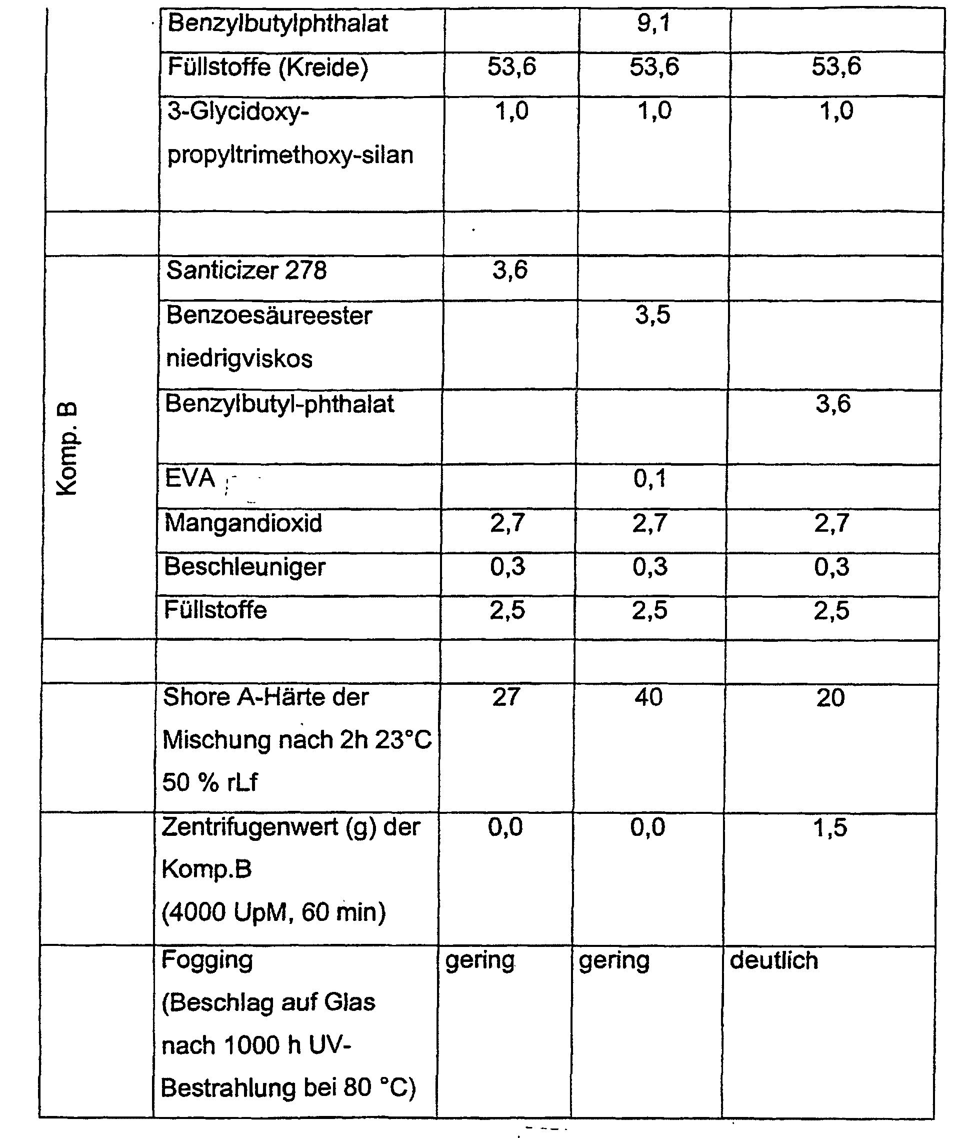

Das Absetzverhalten der Komponenten B wurde mit Hilfe einer Zentrifuge überprüft dabei wurde die Menge separierter, flüssiger Phase ("Überstand") bestimmt, die sich nach Zentrifugieren bei 4000 Umdrehungen / Minute nach einer Std. abgesetzt hatte. Sowohl die Komponente B des bekannten Standes der Technik mit hochviskosem Phthalat-Weichmacher als auch die erfindungsgemäße Komponente B zeigten dabei keinerlei Überstand. Die Verwendung eines niedrigviskosen Phthalsäureesters im Vergleichsversuch zeigte erhebliche Überstandbildung (1.5 g), außerdem wurde bei dem Vergleichsversuch erhebliches "Fogging" nach einer tausendstündigen UV-Bestrahlung bei 80 °C beobachtet.

Bei der erfindungsgemäßen Verwendung von Benzoatweichmachern vereinfacht sich die Produktion, da diese gegenüber den bisher hochviskosen Phthalatestem eine schnelle Durchmischbarkeit der Bestandteile gewährleistet, trotzdem wird ein Absetzen der Feststoffe vermieden. Weiterhin sind die Komponenten A und B bei der Anwendung leichter durchmischbar, da in beiden Komponenten identische niedrigviskose Weichmacher vorhanden sind. Außerdem wird eine verbesserter Aushärtegeschwindingkeit ― gemessen anhand der Shore A-Härte der Mischung 2 Std. nach Durchmischung der Komponente A und B bei 23 °C ― beobachtet.

## Patentansprüche

1. Zweikomponentiger Isolierglas-Kleb-/Dichtstoff bestehend aus einer Bindemittelkomponente und einer Härterkomponente, wobei
A) die Bindemittelkomponente
15 bis 35 Gew % flüssiges Polysulfid- und/oder Polymercaptanpolymer
5 bis 20 Gew % mindestens eines Benzoat-Weichmachers
30 bis 65 Gew % Füllstoffe
0,1 bis 7 Gew % eines Silanhaftvermittlers und
B) die Härterkomponente
20 bis 45 Gew % mindestens eines Benzoat-Weichmachers
0,1 bis 40 Gew % mindestens eines Copolymers
10 bis 40 Gew % eines Oxidationsmittels
1 bis 5 Gew % Beschleuniger
15 bis 35 Gew % Füllstoffe
enthält, und die Summe der Bestandteile der Komponente A bzw. B jeweils 100 % ergeben.

2. Isolierglas- Kleb- /Dichtstoff nach Anspruch 1. **Dadurch gekennzeichnet, daß** das Oxidationsmittel ausgewählt ist aus Calciumperoxid, Bleidioxid, Zinkperoxid, Mangandioxid oder Cumolhydroperoxid.

3. Isolierglas- Kleb-/Dichtstoff nach Anspruch 1 oder 2 **dadurch gekennzeichnet, daß** der Benzoat-Weichmacher der Komponenten A und / oder B ausgewählt wird aus den Benzolsäureestem des Ethylenglycols, Diethylenglycols, Triethylenglycols, Tetraethylenglycols, Propylenglycols, Dipropylenglycols, Tripropylenglycols, Tetrapropylenglycols, 2,2,4-Trimethyl-1,3-Pentandiols, Hydroxypivalinsäureneopentylglycolesters oder deren Mischungen.

## Claims

1. A two-component insulating glass adhesive/sealant consisting of a binder component and a curing component, wherein:
(A) the binder component contains:
15 to 35 wt. % of liquid polysulfide and/or polymercaptan polymer
5 to 20 wt. % of at least one benzoate plasticiser
30 to 65 wt. % of fillers
0.1 to 7 wt. % of a silane adhesion promoter
and
(B) the curing component contains:
20 to 45 wt. % of at least one benzoate plasticiser
0.1 to 40 wt. % of at least one copolymer
10 to 40 wt. % of an oxidising agent
1 to 5 wt. % of accelerator
15 to 35 wt.% of fillers
wherein the totals of the constituents in components (A) and (B) are each 100 wt. %.

2. An insulating glass adhesive/sealant as claimed in claim 1 wherein the oxidising agent is selected from calcium peroxide, lead dioxide, zinc peroxide, manganese dioxide or cumene hydroperoxide.

3. An insulating glass adhesive/sealant as claimed in claim 1 or claim 2 wherein the benzoate plasticiser in components (A) and / or (B) is selected from the benzoic acid esters of ethylene glycol, diethylene glycol, triethylene glycol, tetraethylene glycol, propylene glycol, dipropylene glycol, tripropylene glycol, tetrapropylene glycol, 2,2,4-trimethyl-1,3-pentanediol, neopentyl glycol hydroxypivalate or mixtures thereof.

## Revendications

1. Adhésif/agent d'étanchéité à deux composants pour verre isolant, constitué d'un composant liant et d'un composant durcissant, dans lequel
A) le composant liant contient
15 à 35 % en poids de polymère de polysulfure et/ou de polymercaptan liquide
5 à 20 % en poids d'au moins un plastifiant de benzoate
30 à 65 % en poids de charges
0,1 à 7 % en poids d'un agent adhésif de silane et
B) le composant durcissant contient
20 à 45 % en poids d'au moins un plastifiant de benzoate
0,1 à 40 % en poids d'au moins un copolymère
10 à 40 % en poids d'un oxydant
1 à 5 % en poids d'un accélérateur
15 à 35 % en poids de charges
et la somme des constituants des composants A respectivement B donne toujours 100 %.

2. Adhésif/agent d'étanchéité pour verre isolant selon la revendication 1, **caractérisé en ce que** l'oxydant est choisi parmi le peroxyde de calcium, le dioxyde de plomb, le peroxyde de zinc, le dioxyde de manganèse ou l'hydroperoxyde de cumène.

3. Adhésif/agent d'étanchéité selon la revendication 1 ou 2, **caractérisé en ce que** le plastifiant de benzoate des composants A et/ou B est choisi parmi les esters d'acide benzénique de l'éthylèneglycol, du diéthylèneglycol, du triéthylèneglycol, du tétraéthylèneglycol, du propylèneglycol, du dipropylèneglycol, du tripropylèneglycol, du tétrapropylèneglycol, du 2,2,4-triméthyl-1,3-pentanediol, de l'ester de néopentylglycol de l'acide hydroxypivalique ou de leurs mélanges.
